(19) Europäisches Patentamt
European Patent Office
Office européen des brevets

(11) **EP 3 079 323 B1**

(12) **FASCICULE DE BREVET EUROPEEN**

(45) Date de publication et mention
de la délivrance du brevet:
**16.08.2017 Bulletin 2017/33**

(51) Int Cl.:
***H04L 27/26*** *(2006.01)*

(21) Numéro de dépôt: **16162970.4**

(22) Date de dépôt: **30.03.2016**

(54) **RÉCEPTEUR ET MÉTHODE DE RÉCEPTION FBMC À FAIBLE LATENCE DE DÉCODAGE**

EMPFÄNGER UND FBMC-EMPFANGSMETHODE MIT GERINGER LATENZ DER DEKODIERUNG

FBMC RECEIVER AND RECEIVING METHOD WITH LOW DECODING LATENCY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.04.2015 FR 1553123**

(43) Date de publication de la demande:
**12.10.2016 Bulletin 2016/41**

(73) Titulaire: **Commissariat à l'Énergie Atomique
et aux Énergies Alternatives
75015 Paris (FR)**

(72) Inventeur: **DORE, Jean-Baptiste
38950 SAINT-MARTIN-LE-VINOUX (FR)**

(74) Mandataire: **Brevalex
56, Boulevard de l'Embouchure
B.P. 27519
31075 Toulouse Cedex 2 (FR)**

(56) Documents cités:
• **MAURICE BELLANGER: "Efficiency of Filter
Bank Multicarrier Techniques in Burst Radio
Transmission", GLOBECOM 2010, 2010 IEEE
GLOBAL TELECOMMUNICATIONS
CONFERENCE, IEEE, PISCATAWAY, NJ, USA, 6
décembre 2010 (2010-12-06), pages 1-4,
XP031846032, ISBN: 978-1-4244-5636-9**

## Description

## DOMAINE TECHNIQUE

La présente invention concerne de manière générale le domaine des systèmes de télécommunication utilisant une modulation multi-porteuse à banc de filtres, encore dénommés systèmes FBMC (*Filter Bank Multi-Carrier*).

## ÉTAT DE LA TECHNIQUE ANTÉRIEURE

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (*Orthogonal Frequency Division Multiplexing*). Celle-ci est mise en oeuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL), la quatrième génération de téléphonie cellulaire (LTE), etc.

L'occupation spectrale d'un signal OFDM est toutefois sensiblement plus importante que la bande de sous-porteuses qu'il utilise. En effet, la localisation temporelle du signal étant très bonne (le signal est délimité par un créneau temporel), la localisation fréquentielle ne l'est pas (lobes secondaires en sinus cardinal s'étalant hors de la bande). La modulation OFDM n'est par conséquent pas une solution optimale pour des applications nécessitant de forts taux de réjection hors bande.

La modulation par banc de filtres ou FBMC (Filter Bank Multi Carrier) peut être utilisée comme alternative à la modulation OFDM.

Le principe de la modulation FBMC est basé sur une synthèse par banc de filtres à l'émission et une analyse par banc de filtres à la réception. Les filtres utilisés sont constitués de versions décalées en fréquence d'un filtre-prototype passe-bas satisfaisant au critère de Nyquist.

On trouvera une description détaillée de la modulation FBMC dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Dans le domaine fréquentiel, un signal FBMC peut être représenté par la réponse du banc de filtres de synthèse, à savoir la réponse du filtre prototype, translatée aux différentes fréquences des sous-porteuses.

L'étalement hors-bande n'excède alors pas le double de l'écart fréquentiel entre sous-porteuses adjacentes. Autrement dit, il suffit d'une sous-porteuse non modulée pour isoler deux groupes indépendants de sous-porteuses.

Cette bonne localisation fréquentielle du signal se paie corrélativement par un étalement temporel des symboles FBMC. Lorsque l'on transmet un paquet constitué d'un grand nombre de symboles FBMC, l'étalement temporel est négligeable vis-à-vis de la durée du paquet. En revanche, lorsque les paquets de symboles FBMC sont de faible taille, notamment lorsque la charge utile du signal est faible au regard de celle du préambule, l'étalement temporel peut devenir très pénalisant en termes de débit.

Cette situation se rencontre dans le cas d'un protocole de communication dit à poignée de main (*handshake protocol*) entre un émetteur (par ex. un terminal source) et un récepteur (par ex. un terminal destinataire).

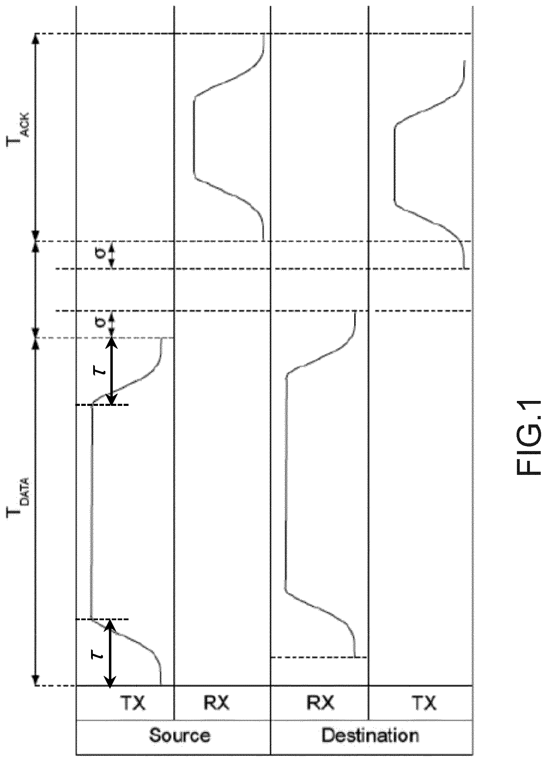

Ce protocole de communication est illustré en Fig. 1.

Le paquet de symboles FBMC est transmis par la source pendant un intervalle de durée $T_{data}$. Cette durée comprend un temps d'établissement $\tau$, une durée $N_sT$ correspondant aux $N_s$ symboles à transmettre, où $T$ est la durée d'un symbole, ainsi qu'un temps de décroissance également égal à $\tau$. On peut montrer que le temps $\tau$ est égal à $(K\text{-}1/2)T$ (dans le cas d'une modulation OQAM) *où K* est le facteur de chevauchement (*overlapping factor*), c'est-à-dire le nombre de symboles FBMC successifs se chevauchant dans le temps.

Ainsi, si l'on note $t_{end}$ l'instant d'émission du dernier symbole FBMC du paquet, ce paquet sera temporellement étalé jusqu'au temps $t_{end}+\tau$. En outre, si l'on note $\sigma$ le temps de propagation du signal entre le terminal source et le terminal destinataire, le décodage du paquet se termine au plus tôt à l'instant $t_{end}+\tau+\sigma$. Après avoir décodé le paquet, le terminal destinataire transmet un message d'acquittement au terminal source. De la même façon que précédemment, le terminal source ne pourra reconnaître l'accusé de réception qu'au temps $t_{end}^{ack}+\tau+\sigma$ où $t_{end}^{ack}$ est la fin du message d'acquittement. On comprend ainsi que la transmission d'un paquet de données selon ce protocole est pénalisée par un temps de latence $2\tau$, dû à l'étalement temporel du signal FBMC.

Une autre situation dans laquelle l'étalement temporel des symboles FBMC pénalise le débit de données concerne l'utilisation d'un protocole de communication TDMA (*Time Division Multiple Access*). Selon ce protocole, l'accès à la ressource de transmission commune (ici l'ensemble des $N$ sous-canaux) est divisé en intervalles temporels de transmission permettant à différents usagers de transmettre leurs paquets de données pendant les intervalles qui leur ont été respectivement alloués.

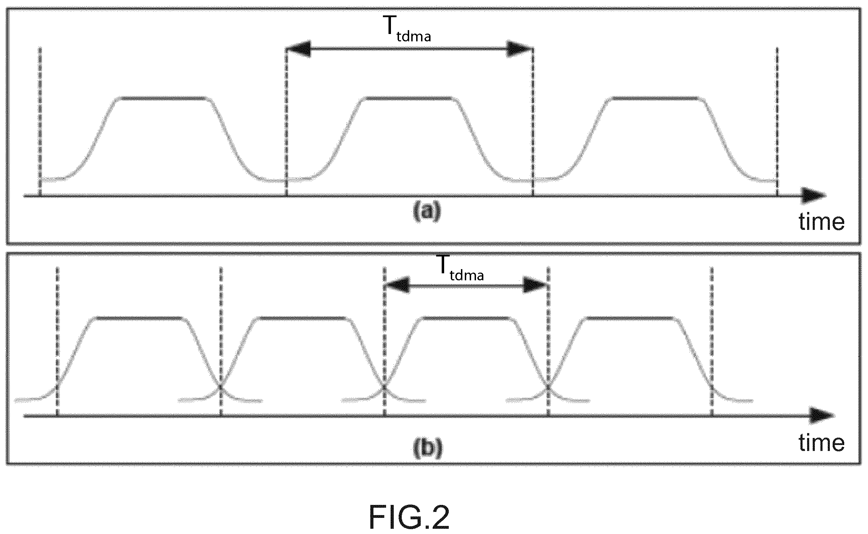

Lorsque les différents usagers transmettent leurs paquets au moyen d'une modulation FBMC, l'occupation temporelle des intervalles de transmission n'est pas optimale. En effet, les temps de montée et de descente du signal OFDM conduisent à un taux d'occupation temporelle des intervalles de transmission de l'ordre de $(T_{tdma}-2\tau)/T_{tdma}$ où $T_{tdma}$ est la durée d'un intervalle de transmission, comme représenté dans le chronogramme (a) de la Fig. 2. Afin de réduire le taux d'occupation temporelle des intervalles de transmission, il est possible de réduire la taille de ces intervalles au prix d'un recouvrement temporel des paquets FBMC successifs et donc d'une augmentation du niveau d'interférence, comme illustré dans le chronogramme (b) de la Fig. 2.

Afin de réduire l'étalement temporel d'un paquet des symboles FBMC, il a été proposé dans l'article de Bellanger intitulé « Efficiency of filter bank multicarriertechniques in burst radio transmission » publié dans IEEE. Proc. of Global Telecommunications Conference (GLOBECOM 2010), pp. 1-4, Dec. 2010, de tronquer la réponse impulsionnelle du filtre prototype utilisé par l'émetteur.

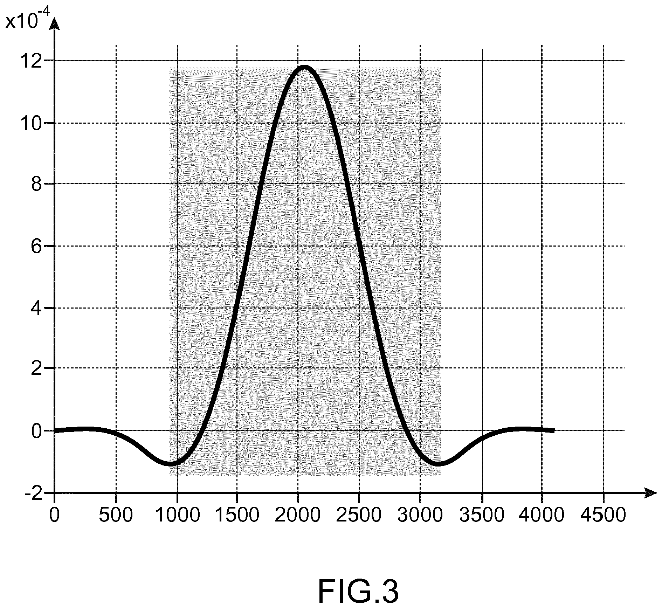

La Fig. 3 représente la réponse impulsionnelle du filtre prototype tronquée pour réduire l'étalement temporel des symboles FBMC. Cette troncation est obtenue par un fenêtrage temporel, 300, centré sur le maximum de la réponse impulsionnelle.

Toutefois, si cette troncation permet effectivement de réduire le temps de latence (dans la première situation évoquée ci-dessus) ou d'augmenter le débit de transmission (dans la seconde situation évoquée ci-dessus), elle dégrade les propriétés spectrales du signal, le gain en localisation temporelle obtenu par le fenêtrage temporel se traduisant par une perte en localisation fréquentielle. Plus précisément, la multiplication du signal par une fenêtre temporelle se traduit par une convolution avec un sinus cardinal dans le domaine fréquentiel et donc l'apparition de lobes secondaires dans le spectre de transmission. Le taux de réjection hors-bande est par conséquent dégradé.

Le but de la présente invention est par conséquent de réduire le temps de latence d'une communication FBMC et plus généralement de permettre un décodage plus rapide d'un paquet de symboles FBMC, sans introduire de dégradation du niveau de réjection hors-bande.

## EXPOSÉ DE L'INVENTION

La présente invention est définie par un récepteur FBMC destiné à recevoir au moins un paquet de symboles FBMC, les symboles FBMC étant transmis au moyen d'une pluralité $N$ de sous-canaux et succédant à une fréquence $f=1/T$ avec un facteur de chevauchement $K$, le récepteur comprenant un échantillonneur pour échantillonner à la fréquence $Nf$ le signal reçu en bande de base, un convertisseur série-parallèle pourformer des blocs d'échantillons successifs de taille $KN$, un module FFT pour effectuer une FFT de taille $KN$ sur chacun desdits blocs, une batterie de filtres d'analyse pour effectuer un filtrage et un désétalement spectral sur les composantes fréquentielles en sortie du module de FFT, ledit récepteur comprenant en outre un premier multiplexeur pour bourrer avec des valeurs nulles une première pluralité ($M_z$) des derniers échantillons du dernier bloc du paquet FBMC à l'entrée du module de FFT, sans attendre la fin de réception du paquet FBMC.

Selon un exemple avantageux de réalisation, le facteur de chevauchement est égal à 4 et ladite première pluralité d'échantillons est égale à $KN/3$ à 10% près.

Le récepteur peut en outre comprendre un second multiplexeur à l'entrée du module de FFT pour bourrer avec des valeurs nulles une seconde pluralité des premiers échantillons du premier bloc du paquet FBMC.

Dans ce cas, si le facteur de chevauchement est égal à 4, la seconde pluralité d'échantillons peut être aussi égale à $KN/3$ à 10% près.

L'invention concerne également une méthode de réception d'au moins un paquet de symboles FBMC, les symboles FBMC étant transmis au moyen d'une pluralité $N$ de sous-canaux et se succédant à une fréquence $f=1/T$ avec un facteur de chevauchement $K$, ladite méthode comprenant un échantillonnage à la fréquence $Nf$ du signal reçu en bande de base, une conversion série-parallèle pour former des blocs d'échantillons successifs de taille $KN$, une FFT de taille $KN$ sur chacun desdits blocs ainsi obtenus, un filtrage et un désétalement spectral, dans le domaine fréquentiel, des composantes fréquentielles en sortie de la FFT. Cette méthode de réception est avantageuse en ce qu'elle comprend, préalablement à la FFT, une première étape de bourrage par des valeurs nulles d'une première pluralité ($M_z$) des derniers échantillons du dernier bloc du paquet FBMC, l'étape de bourrage étant effectuée sans attendre la fin de réception du paquet FBMC.

Selon un exemple avantageux de réalisation, le facteur de chevauchement est égal à 4 et ladite première pluralité d'échantillons est égale à $KN/3$ à 10% près.

La méthode de réception peut comprendre en outre, préalablement à la FFT, une seconde étape de bourrage par des valeurs nulles d'une seconde pluralité des premiers échantillons du premier bloc du paquet FBMC.

Dans ce cas, si le facteur de chevauchement est égal à 4, la seconde pluralité d'échantillons peut être avantageusement choisie égale à $KN/3$ à 10% près.

La méthode de réception peut en outre mettre en oeuvre une égalisation des composantes fréquentielles préalablement à l'étape de filtrage et de désétalement spectral.

Enfin, ladite méthode de réception peut comprendre une étape de démodulation OQAM après l'étape de filtrage et de désétalement spectral.

**BRÈVE DESCRIPTION DES DESSINS**

D'autres caractéristiques et avantages de l'invention apparaîtront à la lecture de modes de réalisation préférentiels référence aux figures jointes parmi lesquelles :

La Fig. 1 représente de manière schématique une communication entre un émetteur et un récepteur FBMC utilisant un protocole à poignée de main ;
La Fig. 2 représente deux chronogrammes de transmission de paquets FBMC en mode TDMA ;
La Fig. 3 représente la réponse impulsionnelle d'un filtre prototype, tronquée temporellement ;
La Fig. 4 représente schématiquement l'architecture d'un récepteur FBMC selon un premier mode de réalisation de l'invention ;
La Fig. 5 représente le principe du bourrage par des zéros des échantillons du dernier symbole FBMC d'un paquet reçu par le récepteur de la Fig. 4 ;
La Fig. 6 représente l'évolution du rapport signal sur interférence au niveau du récepteur en fonction du taux de bourrage par des zéros ;
Les Figs. 7A et 7B représentent la variation du débit en mode saturé en fonction du nombre d'utilisateurs pour deux tailles de paquets distinctes ;
La Fig. 8 représente schématiquement l'architecture d'un récepteur FBMC selon un second mode de réalisation de l'invention.

**EXPOSÉ DÉTAILLÉ DE MODES DE RÉALISATION PARTICULIERS**

L'idée à la base de la présente invention est de ne pas fenêtrer le signal FBMC au niveau de l'émetteur et en particulier de ne pas tronquer la réponse impulsionnelle du filtre prototype mais au contraire d'effectuer un traitement au niveau du récepteur en bourrant les derniers échantillons du dernier bloc reçu par des zéros avant d'effectuer la FFT. On a pu en effet montrer qu'il était possible de n'utiliser qu'une information partielle pour décoder les derniers symboles FBMC.

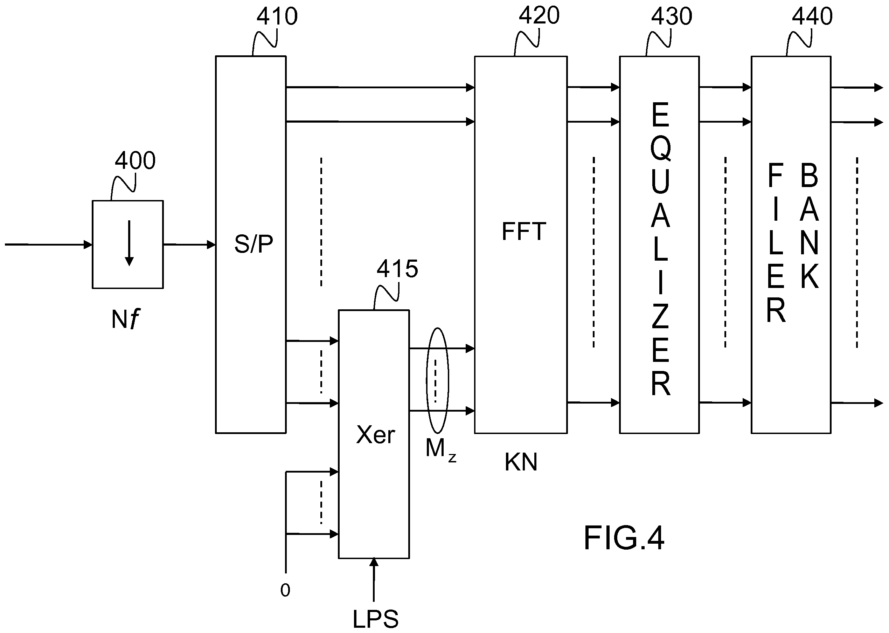

La Fig. 4 représente schématiquement la structure d'un récepteur FBMC selon un premier mode de réalisation de l'invention.

Le signal FBMC reçu, après avoir été démodulé en bande de base, est échantillonné par un échantillonneur, 400, à la fréquence $Nf$ où $f=1/T_s$ est la fréquence symbole. Les échantillons successifs sont groupés, par un convertisseur série/parallèle, 410, sous forme de blocs de longueur $KN$ où $K$ est le facteur de chevauchement.

Une FFT glissante (la fenêtre de la FFT glissant de $KT$ entre deux calculs de FFT) est effectuée au moyen d'un module de FFT, 420, de $KN$ échantillons consécutifs.

Un multiplexeur, 415, en entrée du module de FFT, remplace les $M_z$ derniers échantillons du bloc correspondant au dernier symbole FBMC du paquet par des zéros. Ce multiplexeur est commandé par un signal de commande $LPS$, par exemple issu d'un compteur (non représenté) indiquant le dernier symbole FBMC du paquet.

Ainsi, on comprend que le récepteur n'a pas à attendre les $M_z$ derniers échantillons du dernier bloc du paquet pour effectuer la dernière opération de FFT.

Les composantes fréquentielles en sortie de la FFT sont ensuite soumises, le cas échéant, à une égalisation dans le domaine fréquentiel, dans l'égaliseur 430. L'égaliseur est toutefois un élément optionnel de l'invention, dépendant de la fonction de transfert du canal de transmission.

Après égalisation éventuelle, les sorties de la FFT sont filtrées et désétalées spectralement par la batterie de filtres d'analyse, 440. Plus précisément si $\breve{d}_{i,k}$ sont les échantillons correspondant aux $2K$-1 fréquences $(i$-1$)K+1,...,iK,...,(i+1)K$-1 de la FFT (c'est-à-dire les fréquences du ième sous-canal), la batterie de filtres fournit (pour ce ième sous-canal) l'échantillon :

$$d_i = \sum_{k=-K+1}^{K-1} G_k d_{i,k}$$

où les coefficients $G_k$ sont les valeurs de la fonction de transfert du filtre d'analyse (translatée à la fréquence $iK$ de la fonction de transfert du filtre prototype).

Les données $d_i$ ainsi obtenues peuvent subir une pluralité d'opérations, inverses de celles mises en oeuvre dans l'émetteur FBMC. Par exemple, si les données ont été soumises à une modulation OQAM (Offset QAM) au niveau de l'émetteur, les données $d_i$ subissent ensuite une démodulation OQAM, de manière connue en soi. De même, si les données ont été codées par un codage canal et modulées au moyen d'une modulation Q-aire à symbole selon un schéma MCS *(Modulation and Coding Scheme)* au niveau de l'émetteur, les opérations inverses sont effectuées au niveau du récepteur.

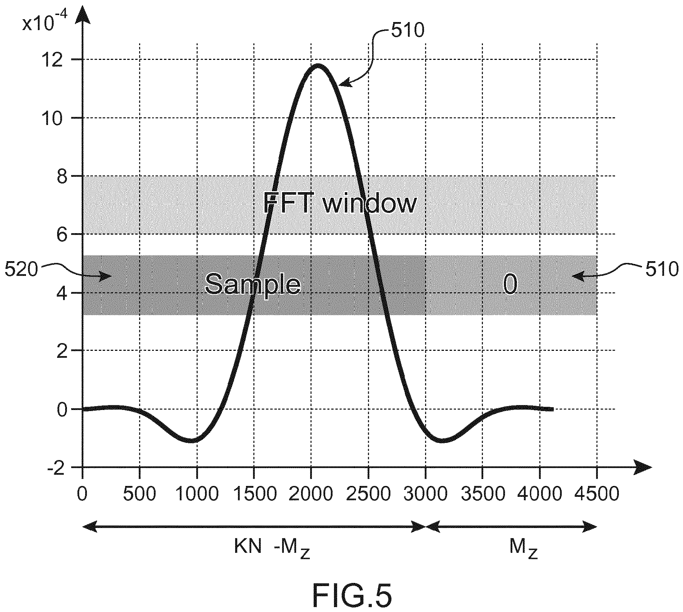

La Fig. 5 illustre le principe du traitement du dernier bloc d'échantillons obtenus du paquet FBMC. On a représenté en abscisses le rang de l'échantillon pour $KN$ échantillons consécutifs en entrée de la FFT et en ordonnées l'amplitude. La forme d'onde 510 est celle d'un signal FBMC correspondant à un seul sous-canal et correspond donc à la réponse impulsionnelle du filtre prototype. On voit que le dernier bloc d'entrée du module de FFT est constitué de $KN$-$M_z$ échantillons du signal, 520, et de $M_z$ échantillons de bourrage constitués par des valeurs nulles, 530. Ainsi, le récepteur n'a pas à attendre la fin de l'étalement temporel du dernier symbole FBMC pour terminer le décodage du paquet. Autrement dit, le dernier ou les derniers symboles FBMC (pour tenir compte du chevauchement de ces symboles) sont décodés sur la base d'une information partielle.

On a pu montrer que cette mise à zéro de la fin du dernier bloc d'échantillons n'affectait que peu les performances du décodage de ce bloc.

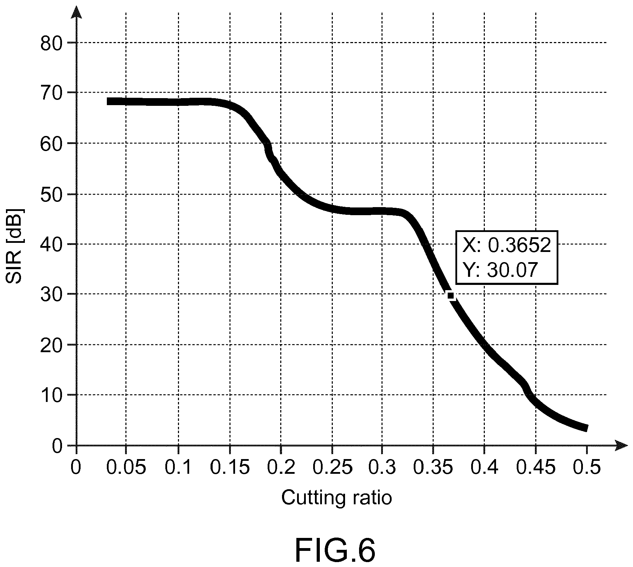

La Fig. 6 représente l'évolution du rapport signal sur interférence en fonction du taux de bourrage du dernier bloc par des zéros. Plus précisément, on appelle taux de bourrage le rapport $M_z/NK$. On a pris ici pour exemple $K=4$ et $N=1024$.

On voit que le rapport signal sur interférence reste constant tant que le taux de bourrage reste inférieur à 0.15 puis décroit pour observer un palier jusqu'à un taux de bourrage d'environ 1/3, puis décroit à nouveau.

Selon le niveau de niveau de SIR minimum souhaité, autrement dit selon le taux d'erreurs binaires (BER) maximal acceptable, on peut déterminer à l'aide de cette courbe le taux de bourrage maximal. Par exemple, dans le cas illustré si l'on souhaite avoir un rapport signal sur interférence supérieur à 45 dB on choisira un taux de bourrage voisin de 0.3. On comprend ainsi que l'on gagne environ un temps de $T/3$ par rapport à une démodulation FBMC classique tout en gardant un très bon taux de réjection hors-bande puisque le signal FBMC émis est inchangé.

De manière générale, pour un facteur de chevauchement $K=4$, le taux de bourrage par des zéros du dernier bloc est choisi égal à $KN/3$

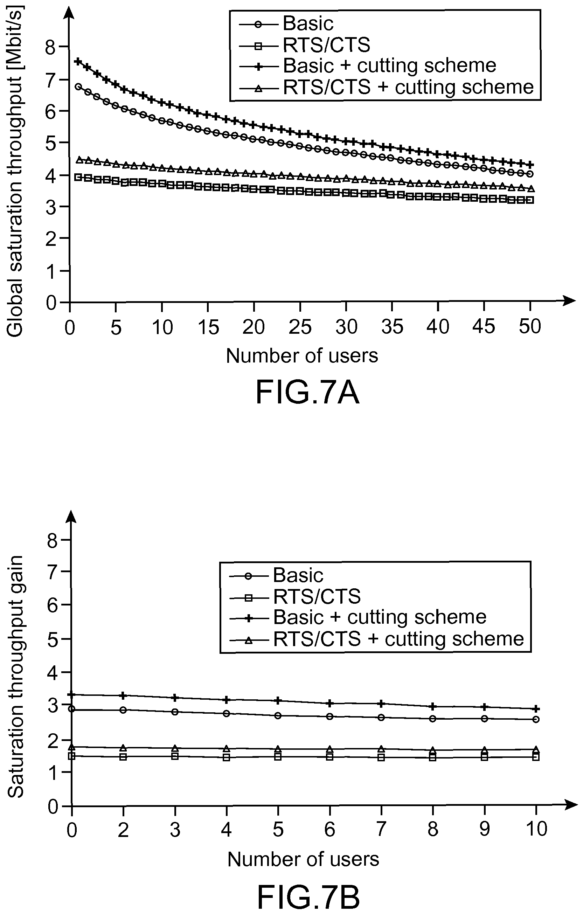

Les Figs. 7A et 7B représentent le débit en mode saturé d'un système de communication FBMC en fonction du nombre d'utilisateurs. Deux protocoles à poignées de main ont été ici envisagés. Le premier protocole est une version basique de partage d'accès à la ressource dite CSMA/CA (*Carrier Sense Multiple Access with Collision Avoidance*) mettant en oeuvre deux poignées de main et le second protocole est une version évoluée, utilisant deux signaux de signalisation supplémentaires RTS/CTS (*Request To Send/Clear To Send*) et mettant en oeuvre quatre poignées de main entre l'émetteur et le récepteur.

Pour chacun de ces deux protocoles, on a aussi représenté les performances d'une réception FBMC avec un bourrage de zéros comme décrit ci-dessus.

Pour ces deux protocoles, on a utilisé un schéma MCS avec un codage canal de rendement $R=3/4$ et une modulation 16 QAM.

La Fig. 7A correspond à une taille de paquet de 1500 octets et la Fig. 7B à une taille de paquet de 500 octets. On remarque qu'à la saturation, le gain en débit est de près de 10% pour une taille de paquet de 1500 octets et de près de 16% pour une taille de paquet de 500 octets. Comme prévu, le gain est d'autant plus important que la taille de paquet est faible.

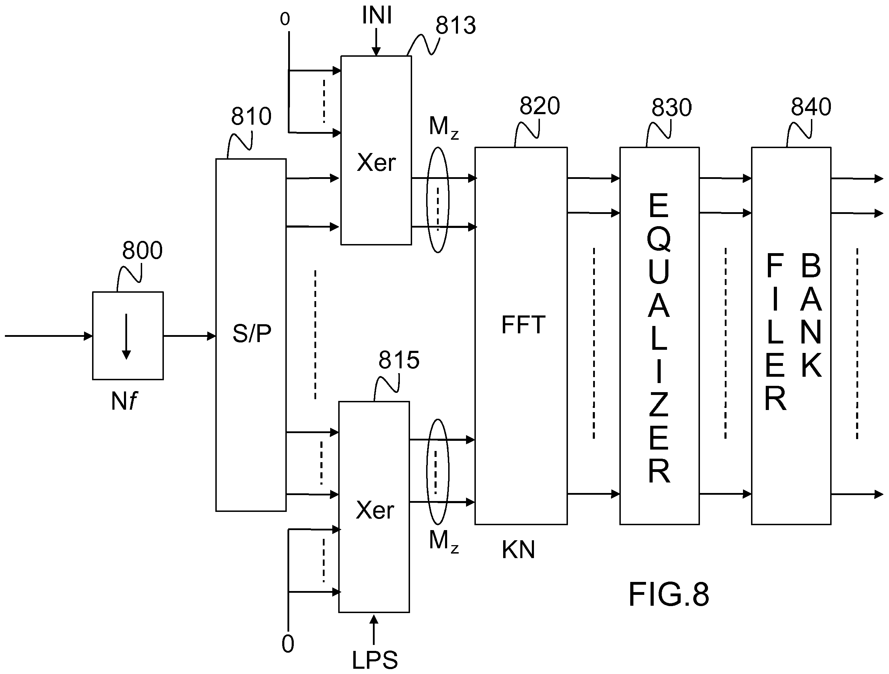

La Fig. 8 représente schématiquement la structure d'un récepteur FBMC selon un second mode de réalisation de l'invention.

A la différence du premier mode de réalisation, le bourrage par des zéros intervient ici à la fois au début du premier bloc d'échantillons et à la fin du dernier bloc d'échantillons du paquet FBMC.

Comme en Fig. 4, le signal FBMC reçu est démodulé en bande de base puis échantillonné à la fréquence $Nf$. Les échantillons successifs sont groupés, convertisseur série/parallèle, 810, sous forme de blocs de longueur $KN$ où $K$ est le facteur de chevauchement.

Le module de FFT 820 effectue une FFT glissante sur un bloc de $KN$ échantillons consécutifs.

Un second multiplexeur, 815, en entrée du module de FFT, 820, remplace les $M_z$ derniers échantillons du bloc correspondant au dernier symbole FBMC du paquet par des zéros. De manière similaire, un second multiplexeur, 813, en entrée du module de FFT, 820, remplace les $M_z$ premiers échantillons du bloc correspondant au premier symbole FBMC du paquet par des zéros. Selon une variante, le nombre d'échantillons mis à zéro peut être différent pour les premier et second multiplexeurs.

Le premier multiplexeur est commandé par un signal d'initialisation, *INI*, indiquant le début d'un nouveau paquet. Le second multiplexeur est commandé par un signal de commande *LPS*, issu d'un compteur, indiquant le dernier symbole FBMC du paquet, comme dans le premier mode de réalisation.

Ainsi, le récepteur ne tient pas compte de l'étalement temporel du premier symbole et du dernier symbole du paquet FBMC pour le décoder. Il est alors possible de réduire la taille des intervalles de transmission comme dans le chronogramme (b) de la Fig. 2 sans dégrader le niveau d'interférence et donc sans augmenter le taux d'erreur.

Comme dans le premier mode de réalisation, les composantes fréquentielles en sortie de la FFT sont soumises à une égalisation éventuelle dans le domaine fréquentiel par l'égaliseur 830, puis à un filtrage et un désétalement spectral par la batterie de filtres d'analyse, 840.

Comme dans le premier mode de réalisation, également, les données en sortie de la batterie de filtres, 840, peuvent ensuite faire l'objet d'une démodulation OQAM, d'une démodulation symbole à binaire suivie d'un décodage canal, en fonction des opérations effectuées du côté de l'émetteur.

**Revendications**

1. Récepteur FBMC destiné à recevoir au moins un paquet de symboles FBMC, les symboles FBMC étant transmis au moyen d'une pluralité $N$ de sous-canaux et succédant à une fréquence $f=1/T$ avec un facteur de chevauchement $K$, le récepteur comprenant un échantillonneur (400,800) pour échantillonner à la fréquence $Nf$ le signal reçu en bande de base, un convertisseur série-parallèle (410, 810) pour former des blocs d'échantillons successifs de taille $KN$, un module FFT (430, 830) pour effectuer une FFT de taille $KN$ sur chacun desdits blocs, une batterie de filtres d'analyse (440, 840) pour effectuer un filtrage et un désétalement spectral sur les composantes fréquentielles en sortie du module de FFT, **caractérisé en ce qu'**il comprend en outre un premier multiplexeur (415, 815) pour bourrer avec des valeurs nulles une première pluralité ($M_z$) des derniers échantillons du dernier bloc du paquet FBMC à l'entrée du module de FFT, sans attendre la fin de réception du paquet FBMC.

2.  Récepteur FBMC selon la revendication 1, **caractérisé en ce que** le facteur de chevauchement est égal à 4 et ladite première pluralité d'échantillons est égale à $KN$/3 à 10% près.

3.  Récepteur FBMC selon la revendication 1 ou 2, **caractérisé en ce qu'**il comprend un second multiplexeur (813) à l'entrée du module de FFT (820) pour bourrer avec des valeurs nulles une seconde pluralité des premiers échantillons du premier bloc du paquet FBMC.

4.  Récepteur FBMC selon la revendication 3 **caractérisé en ce que** le facteur de chevauchement est égal à 4 et la seconde pluralité d'échantillons est égale à $KN$/3 à 10% près.

5.  Méthode de réception d'au moins un paquet de symboles FBMC, les symboles FBMC étant transmis au moyen d'une pluralité $N$ de sous-canaux et succédant à une fréquence $f$=1/$T$ avec un facteur de chevauchement $K$, ladite méthode comprenant un échantillonnage à la fréquence $Nf$ du signal reçu en bande de base, une conversion série-parallèle pour former des blocs d'échantillons successifs de taille $KN$, une FFT de taille $KN$ sur chacun desdits blocs ainsi obtenus, un filtrage et un désétalement spectral, dans le domaine fréquentiel, des composantes fréquentielles en sortie de la FFT, **caractérisée en ce qu'**elle comprend, préalablement à la FFT, une première étape de bourrage par des valeurs nulles d'une première pluralité ($M_z$) des derniers échantillons du dernier bloc du paquet FBMC, l'étape de bourrage étant effectuée sans attendre la fin de réception du paquet FBMC.

6.  Méthode de réception selon la revendication 5, **caractérisée en ce que** le facteur de chevauchement est égal à 4 et ladite première pluralité d'échantillons est égale à $KN$/3 à 10% près.

7.  Méthode de réception selon la revendication 5, **caractérisée en ce qu'**elle comprend en outre, préalablement à la FFT, une seconde étape de bourrage par des valeurs nulles d'une seconde pluralité des premiers échantillons du premier bloc du paquet FBMC.

8.  Méthode de réception selon la revendication 7, **ca-**

**ractérisée en ce que** le facteur de chevauchement est égal à 4 et la seconde pluralité d'échantillons est égale à $KN$/3 à 10% près.

9.  Méthode de réception selon l'une des revendications 5-8, **caractérisée en ce qu'**elle comprend une égalisation des composantes fréquentielles préalablement à l'étape de filtrage et de désétalement spectral.

10. Méthode de réception selon l'une des revendications 5-9, **caractérisée en ce qu'**elle comprend une démodulation OQAM après l'étape de filtrage et de désétalement spectral.


**Patentansprüche**

1.  FBMC-Empfänger, der zum Empfangen wenigstens eines Pakets von FBMC-Symbolen ausgelegt ist, wobei die FBMC-Symbole mit Hilfe einer Mehrzahl $N$ von Unterkanälen und aufeinanderfolgend mit einer Frequenz $f$ = 1/$T$ mit einem Überlappungsfaktor $K$ übertragen werden, wobei der Empfänger einen Abtaster (400, 800) zum Abtasten des im Basisband empfangenen Signals mit der Frequenz $Nf$ umfasst, einen Seriell-Parallel-Wandler (410, 810) zum Bilden von aufeinanderfolgenden Abtastwerten der Größe $KN$, ein FFT-Modul (430, 830) zum Durchführen einer FFT der Größe $KN$ auf jedem der Blöcke, eine Bank von Analysefiltern (440, 840) zum Durchführen einer Filterung und einer spektralen Entspreizung auf den Frequenzkomponenten am Ausgang des FFT-Moduls, **dadurch gekennzeichnet, dass** es ferner einen ersten Multiplexer (415, 815) umfasst, um eine erste Mehrzahl ($M_z$) der letzten Abtastwerte des letzten Blocks des FBMC-Pakets am Eingang des FFT-Moduls mit Null-Werten aufzufüllen, ohne das Ende des Empfangs des FBMC-Pakets abzuwarten.

2.  FBMC-Empfänger nach Anspruch 1, **dadurch gekennzeichnet, dass** der Überlappungsfaktor gleich 4 ist, und dass die erste Mehrzahl von Abtastwerten bis auf 10% gleich $KN$/3 ist.

3.  FBMC-Empfänger nach Anspruch 1 oder 2, **dadurch gekennzeichnet, dass** er einen zweiten Multiplexer (813) am Eingang des FFT-Moduls (820) umfasst, um eine zweite Mehrzahl der ersten Abtastwerte des ersten Blocks des FBMC-Pakets mit Null-Werten aufzufüllen.

4.  FMBC-Empfänger nach Anspruch 3, **dadurch gekennzeichnet, dass** der Überlappungsfaktor gleich 4 ist, und dass die zweite Mehrzahl von Abtastwerten bis auf 10% gleich $KN$/3 ist.

**5.** Verfahren zum Empfang wenigstens eines Pakets von FBMC-Symbolen, wobei die FBMC-Symbole mit Hilfe einer Mehrzahl *N* von Unterkanälen und aufeinanderfolgend mit einer Frequenz *f*=1/*T* mit einem Überlappungsfaktor *K* übertragen werden, wobei das Verfahren eine Abtastung des im Basisband empfangenen Signals mit der Frequenz *Nf* umfasst, eine Seriell-Parallel-Umwandlung zum Bilden von aufeinanderfolgenden Blöcken von Abtastwerten der Größe *KN,* eine FFT der Größe *KN* auf jedem der derart erhaltenen Blöcke, eine Filterung und eine spektrale Entspreizung in der Frequenzdomaine der Frequenzkomponenten am Ausgang des FFT, **dadurch gekennzeichnet, dass** es vor der FFT einen ersten Schritt umfasst zum Auffüllen einer ersten Mehrzahl ($M_z$) der letzten Abtastwerte des letzten Blocks des FBMC-Pakets mit Null-Werten, wobei der Schritt des Auffüllens durchgeführt wird, ohne das Ende des Empfangs des FBMC-Pakets abzuwarten.

**6.** Empfangsverfahren nach Anspruch 5, **dadurch gekennzeichnet, dass** der Überlappungsfaktor gleich 4 ist, und dass die erste Mehrzahl von Abtastwerten bis auf 10% gleich *KN*/3 ist.

**7.** Empfangsverfahren nach Anspruch 5, **dadurch gekennzeichnet, dass** es ferner, vor der FFT, einen zweiten Schritt zum Auffüllen einer zweiten Mehrzahl der ersten Abtastwerte des ersten Blocks des FBMC-Pakets mit Null-Werten umfasst.

**8.** Empfangsverfahren nach Anspruch 7, **dadurch gekennzeichnet, dass** der Überlappungsfaktor gleich 4 ist, und dass die zweite Mehrzahl von Abtastwerten bis auf 10% gleich *KN*/3 ist.

**9.** Empfangsverfahren nach einem der Ansprüche 5 bis 8, **dadurch gekennzeichnet, dass** es eine Entzerrung der Frequenzkomponenten vor dem Schritt der Filterung und der spektralen Entspreizung umfasst.

**10.** Empfangsverfahren nach einem der Ansprüche 5 bis 9, **dadurch gekennzeichnet, dass** es eine OQAM-Demodulation nach dem Schritt der Filterung und der spektralen Entspreizung umfasst.

## Claims

**1.** FBMC receiver intended to receive at least one packet of FBMC symbols, the FBMC symbols being transmitted by means of a plurality *N* of sub-channels and following one another at a frequency *f*=1/*T* with an overlapping factor *K,* the receiver comprising a sampler (400,800) to sample at the frequency *Nf* the signal received in baseband, a serial-parallel converter (410, 810) to form blocks of successive samples of size *KN,* a FFT module (430, 830) to carry out a FFT of size *KN* on each of said blocks, a battery of analysis filters (440, 840) to carry out a filtering and a spectral despreading on the frequency components at the output of the FFT module, **characterised in that** it further comprises a first multiplexer (415, 815) to pad with zero values a first plurality ($M_z$) of the last samples of the last block of the FBMC packet at the input of the FFT module, without waiting for the end of reception of the FBMC packet.

**2.** FBMC receiver according to claim 1, **characterised in that** the overlapping factor is equal to 4 and said first plurality of samples is equal to *KN*/3 to within 10%.

**3.** FBMC receiver according to claim 1 or 2, **characterised in that** it comprises a second multiplexer (813) at the input of the FFT module (820) to pad with zero values a second plurality of the first samples of the first block of the FBMC packet.

**4.** FBMC receiver according to one of the preceding claims, **characterised in that** the overlapping factor is equal to 4 and the second plurality of samples is equal to KN/*3* to within 10%.

**5.** Method of reception at least one packet of FBMC symbols, the FBMC symbols being transmitted by means of a plurality *N* of sub-channels and following one another at a frequency *f*=1/*T* with an overlapping factor *K,* said method comprising a sampling at the frequency *Nf* of the signal received in baseband, a serial-parallel conversion to form blocks of successive samples of size *KN,* a FFT of size *KN* on each of said blocks thereby obtained, a filtering and a spectral despreading, in the frequency domain, of the frequency components at the output of the FFT, **characterised in that** it comprises, prior to the FFT, a first step of padding with zero values a first plurality ($M_z$) of the last samples of the last block of the FBMC packet, the step of padding being carried out without waiting for the end of reception of the FBMC packet.

**6.** Reception method according to claim 5, **characterised in that** the overlapping factor is equal to 4 and said first plurality of samples is equal to *KN*/3 to within 10%.

**7.** Reception method according to claim 5, **characterised in that** it further comprises, prior to the FFT, a second step of padding with zero values a second plurality of the first samples of the first block of the FBMC packet.

**8.** Reception method according to claim 7, **characterised in that** the overlapping factor is equal to 4 and the second plurality of samples is equal to *KN*/3 to within 10%.

9.  Reception method according to one of claims 5-8, **characterised in that** it comprises an equalization of the frequency components prior to the step of filtering and spectral despreading.

10. Reception method according to one of claims 5-9, **characterised in that** it comprises an OQAM demodulation after the step of filtering and spectral despreading.

FIG.1

FIG.2

FIG.3

FIG.4

FIG.5

FIG.6

FIG.7A

FIG.7B

FIG.8

## RÉFÉRENCES CITÉES DANS LA DESCRIPTION

**Littérature non-brevet citée dans la description**

- An orthogonally multiplexed QAM system using the discrete Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183

- **BELLANGER.** Efficiency of filter bank multicarriertechniques in burst radio transmission. *IEEE. Proc. of Global Telecommunications Conference (GLOBECOM 2010),* Décembre 2010, 1-4